# EUROPEAN PATENT SPECIFICATION

(11) **EP 2 423 282 B1**
(45) Date of publication and mention of the grant of the patent: **18.07.2018**
(21) Application number: 10766830.3
(22) Date of filing: 19.04.2010
(51) Int. Cl.: C09J 4/02, C09J 175/14, C08F 220/58, C08G 75/04, C08F 222/10

(54) **THIOL GROUP-CONTAINING ADHESIVE RESIN COMPOSITION**
THIOLGRUPPENHALTIGE HAFTMITTELHARZZUSAMMENSETZUNG
COMPOSITION DE RÉSINE ADHÉSIVE COMPRENANT UN GROUPE THIOL

(30) Priority: 20.04.2009 JP 2009102426
(43) Date of publication of application: 29.02.2012
(73) Proprietor: Bridgestone Corporation, Tokyo 104-8340 (JP)
(72) Inventor: KITANO, Hajime, Kodaira-shi Tokyo 187-8531 (JP); AKAMA, Shuyou, Kodaira-shi Tokyo 187-8531 (JP)
(74) Representative: Oxley, Robin John George
(86) International application number: PCT/JP2010/002818
(87) International publication number: WO 2010/122768

(56) References cited:
- WO-A1-2009/084386
- JP-A- 7 310 067
- JP-A- 8 167 172
- JP-A- 10 306 267
- JP-A- 11 100 419
- JP-A- 2000 198 824
- JP-A- 2005 255 844
- JP-A- 2005 272 495
- JP-A- 2006 150 755
- JP-A- 2007 070 533
- JP-A- 2008 063 527
- JP-A- 2008 077 067
- JP-A- 2008 184 538
- JP-A- 2008 239 974
- JP-A- 2008 284 467
- US-A1- 2002 004 537
- US-A1- 2006 128 856

## Description

### TECHNICAL FIELD

The present invention generally relates to thiol group-containing adhesive resin compositions, and more specifically, to light-curable thiol group-containing adhesive resin compositions with good adhesion to various adherends, such as thermoplastic resins, metal oxides or metals, in particular PET (notably, untreated PET), polyimide, Au or IZO.

### RELATED ART

Thermosetting adhesive materials are conventionally known as adhesive materials for bonding electronic parts, machinery parts and so on. For example, adhesive materials used for bonding of electronic parts include anisotropic conductive film (ACF), anisotropic conductive paste (ACP), non-conductive film (NCF), non-conductive paste (NCP). However, since the traditional ACF, ACP, NCF and NCP are thermosetting adhesive materials, there are problems in that they require high temperature treatment and take longer to be cured. This could reduce productivity.

On the other hand, light-curable adhesive materials have been developed for bonding of electronic parts. The light-curable adhesive materials may lead to improved productivity because adhesion is completed in an extremely short period of time upon light irradiation at low temperature.

Under such circumstances, for example, Patent Document 1 discloses a light-curable adhesive material composed of an acrylate oligomer, an acrylate monomer diluent and a thiol compound. US2006128856, JP2007070533, JP2008063527, JP2006150755, JP2005272495, JP2005255844, JPH11100419, JP2000198824, JP2008184538, JPH07310067, JPH08167172, JP2008284467, JP2008239974, and JPH10306267 disclose adhesives, components for adhesives, and curable compositions and structures using these.

### RELATED ART DOCUMENT

### PATENT DOCUMENT

Patent Document 1: JP-A-2002-513987

### DISCLOSURE OF THE INVENTION

### PROBLEMS TO BE SOLVED BY THE INVENTION

However, recent assembly of electronic parts requires simultaneous bonding of metals such as gold or nickel, metal oxides such as IZO or ITO and thermoplastic resins such as PET or polyimide as adherends. Therefore, there is a need for adhesive materials with good adhesion to various adherends, not only to a particular adherend. Nonetheless, all of these light-curable adhesive materials exhibit good adhesion only to a particular adherend, and thus there remains scope for further improvements in adhesion to metals such as gold or metal oxides such as IZO

Accordingly, an object of the present invention is to provide a light-curable adhesive resin composition with good adhesion to adherends, including not only thermoplastic resins such as PET (particularly, so-called untreated PET without adhesive coating) or polyimide, but also metal oxides such as IZO and metals such as gold.

### MEANS FOR SOLVING THE PROBLEM

To solve the above-described problems, the inventors have found a thiol group-containing adhesive resin composition, which has a certain amount of thiol groups based on the amount of (meta-) acrylate groups contained in a particular (meta-) acrylate oligomer or (meta-) acrylate monomer. Based on this, the present invention is completed.

That is, a thiol group-containing adhesive resin composition of the present invention comprises: (A) a urethane (meta-) acrylate oligomer having a weight average molecular weight (Mw) of 5,000-40,000; (B) a (meta-) acryloyl morpholine monomer; (C) a polythiol; and (D) a photopolymerization initiator,
wherein the polythiol (C) has thiol groups in an amount of 0.4-1.2 equivalents per 1 equivalent of the total (meta-) acrylate groups contained in the thiol group-containing adhesive resin composition.

The polythiol (C) may also have thiol groups in an amount of 1.0 equivalent or less per 1 equivalent of the total (meta-) acrylate groups contained in the urethane (meta-) acrylate oligomer (A) and in the (meta-) acryloyl morpholine monomer (B).

It is also desirable that the (meta-) acryloyl morpholine monomer (B) is contained in an amount of 20 parts by mass or more, preferably 30-70 parts by mass, per 100 parts by mass of the total of the urethane (meta-) acrylate oligomer (A) and the (meta-) acryloyl morpholine monomer (B).

Further, the polythiol (C) is desirably a polythiol derived from mercaptocarboxylic acid.

As used herein, the term "weight average molecular weight (Mw)" refers to a value which is measured by GPC and can be calculated by polystyrene conversion.

### EFFECT OF THE INVENTION

The thiol group-containing adhesive resin composition of the present invention may also enhance adhesion to adherends, including metal oxides such as IZO and metals such as gold, while maintaining good adhesion to thermoplastic resins such as PET (particularly, untreated PET) or polyimide, and may still be well adapted to increasingly diversifying applications, such as assembly of electronic parts.

### BEST MODE FOR CARRYING OUT THE INVENTION

The present invention will now be described in detail below.

The thiol group-containing adhesive resin composition of the present invention comprises: (A) a urethane (meta-) acrylate oligomer having a weight average molecular weight (Mw) of 5,000-40,000; (B) a (meta-) acryloyl morpholine monomer; (C) a polythiol; and (D) a photopolymerization initiator,
wherein the polythiol (C) has thiol groups in an amount of 0.4-1.2 equivalents or more per 1 equivalent of the total (meta-) acrylate groups contained in the thiol group-containing adhesive resin composition.

### [Urethane (Meth)Acrylate Oligomer (A)]

The above-described urethane (meta-) acrylate oligomer (A) is a compound that has a weight average molecular weight (Mw) of 5,000-40,000, preferably 5,000-20,000, and contains one or more (meta-) acryloyloxy group(s) [CH₂ = CHCOO- or CH₂ = C(CH₃)COO-] as well as a plurality of urethane bonds (-NHCOO-). This urethane (meta-) acrylate oligomer (A) may be produced by, for example, synthesizing a urethane prepolymer from polyol and polyisocyanate and adding (meta-) acrylate having a hydroxyl group to the urethane prepolymer. If the urethane (meta-) acrylate oligomer has a weight average molecular weight (Mw) below 5,000, the resultant composition may not provide sufficient adhesion; whereas above 40,000, the urethane (meta-) acrylate oligomer may become less compatible with the other components.

Polyol for use in synthesizing the urethane prepolymer is a compound having a plurality of hydroxyl groups. Specifically, examples of the polyol include polyether polyol, polyester polyol, polytetramethylene glycol, polybutadiene polyol, alkylene oxide-modified polybutadiene polyol and polyisoprene polyol. Besides, the polyether polyol may be obtained by, for example, adding alkylene oxide such as ethylene oxide or propylene oxide to polyol such as ethylene glycol, propylene glycol or glycerin; and the polyester polyol may be obtained from, for example, polyol such as ethylene glycol, diethylene glycol, 1,4-butanediol, 1,6-hexanediol, propylene glycol, trimethylol ethane or trimethylol propane, and polyvalent carboxylic acid such as adipic acid, glutaric acid, succinic acid, sebacic acid, pimelic acid or suberic acid.

The polyisocyanate is a compound having a plurality of isocyanate groups (NCO group). Specifically, examples of the polyisocyanate include trirange isocyanate (TDI), diphenyl methane diisocyanate (MDI), crude diphenyl methane diisocyanate (crude MDI), isophorone diisocyanate (IPDI), hydrogenated diphenyl methane diisocyanate, hydrogenated tolylene diisocyanate, hexamethylene diisocyanate (HDI), and isocyanurate-, carbodiimide- and glycol-modified products thereof.

Preferably, a catalyst for urethanization reaction is used to synthesize the urethane prepolymer. Examples of the catalyst for urethanization reaction include organic tin compounds, inorganic tin compounds, organic lead compounds, monoamines, diamines, triamines, cyclic amines, alcohol amines, ether amines, organic sulfonic acids, mineral acids, titanium compounds, bismuth compounds and quaternary ammonium salts; among these, preferred are organic tin compounds. In addition, preferred organic tin compounds include dibutyltin dilaurate, dibutyltin diacetate, dibutyltin thiocarboxylate, dibutyltin dimaleate, dioctyltin thiocarboxylate, octenoic acid tin and monobutyl tin oxide.

In addition, the (meta-) acrylate having a hydroxyl group to be added to the urethane prepolymer is a compound having one or more hydroxyl group(s) and one or more (meta-) acryloyloxy groups. This (meta-) acrylate having a hydroxyl group may be added to the isocyanate groups of the urethane prepolymer. Examples of the (meta)acrylate having a hydroxyl group include 2-hydroxyethyl(meta-) acrylate, 2-hydroxypropyl(meta-) acrylate and pentaerythritoltri(meta-) acrylate.

### [(Meth)Acryloyl Morpholine Monomer (B)]

The above-described (meta-) acryloyl morpholine monomer (B) is a cyclic monomer having a morpholine ring represented by formula (X) below. In the thiol group-containing adhesive resin composition of the present invention, it is desirable that the (meta-) acryloyl morpholine monomer (B) is contained in an amount of 20 parts by mass, preferably 30-70 parts by mass, per 100 parts by mass of the total of the urethane (meta-) acrylate oligomer (A) and the (meta-) acryloyl morpholine monomer (B). If the (meta-) acryloyl morpholine monomer (B) is contained in an amount of 30 parts by mass or more, it may provide good adhesion; whereas above 70 parts by mass, it may have an insufficient crosslink density and thus impair oligomer properties (mechanical properties). Accordingly, within the above-described range, a suitable amount of (meta-) acrylate groups associated with the bonding development may be present in the crosslinked polymer formed by the urethane (meta-) acrylate oligomer (A) and the (meta-) acryloyl morpholine monomer (B). This may improve adhesion to adherends, including thermoplastic resins such as PET (particularly untreated PET) or polyimide, metal oxides and metals, while effectively preventing reduction in bonding strength and increase in viscosity in combination with a desired amount of thiol groups, which will be discussed later. 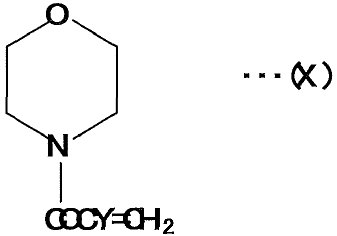 (where Y is H or CH₃.)

### [Polythiol (C)]

The thiol group-containing adhesive resin composition of the present invention contains a polythiol (C). Since the polythiol (C) has thiol groups, there exist thiol groups in the thiol group-containing adhesive resin composition. In addition, both the urethane (meta-) acrylate oligomer (A) and the (meta-) acryloyl morpholine monomer (B) have (meta-) acrylate groups. Thus, (meta-) acrylate groups also exist in the thiol group-containing adhesive resin composition. As described below, if the thiol group-containing adhesive resin composition contains other additives having (meta-) acrylate groups, there exist (meta-) acrylate groups resulting from these additives in the thiol group-containing adhesive resin composition. That is, the thiol group-containing adhesive resin composition of the present invention contains (meta-) acrylate groups resulting from the urethane (meta-) acrylate oligomer (A), (meta-) acryloyl morpholine monomer (B) and other additives. Then, the polythiol (C) has thiol groups in an amount of 0.4-1.2 equivalents, preferably 0.45-1.2 equivalents, more preferably 0.5-1 equivalents, per 1 equivalent of the total (meta-) acrylate groups contained in the thiol group-containing adhesive composition. Besides, this value may be calculated from the number of moles and the number of functional groups of the above-described urethane (meta-) acrylate oligomer (A), (meta-) acryloyl morpholine monomer (B) and other additives having (meta-) acrylate groups and the number of moles and the number of functional groups of the polythiol (C). As such, the thiol groups are present in a certain amount based on the amount of (meta-) acrylate groups. This allows improvements in adhesion to adherends, including metal oxides such as IZO or metals such as gold, without interfering with the bonding development function provided by the (meta-) acrylate groups.

The above-described polythiol (C) is, without limitation, preferably a polythiol derived from mercaptocarboxylic acid, more preferably 3-mercaptopropionic acid derived-polythiol. This polythiol (C) preferably has a plurality of, more preferably two to six mercaptoacyloxy groups in molecule. Specifically, the mercaptoacyloxy groups include 3-mercaptopropionyloxy group [HS-(CH₂)₂-COO-], 3-mercaptobutyryloxy group [HS-CH(CH₃)-CH₂-COO-], and so on; among these, preferred is 3-mercaptopropionyloxy group. For example, when combined with a thermal radical generator, the polythiol derived from mercaptocarboxylic acid generates thiyl radicals through those radicals that are derived from the thermal radical generator. These thiyl radicals are then added to unsaturated bonds of the (meta-) acrylate groups to promote curing (crosslinking) reaction.

As specific examples of the above-described polythiol (C), the following are preferred: tetraethylene glycol bis(3-mercaptopropionate) represented by the following chemical formula (I); trimethylol propane tris(3-mercaptopropionate) represented by (II); tris[(3-mercaptopropionyloxy)-ethyl]isocyanurate represented by (III); pentaerythritol tetrakis(3-mercaptopropionate) represented by (IV); dipentaerythritol hexakis(3-mercaptopropionate) represented by (V); 1,4-bis(3-mercaptobutyryloxy)butane represented by (VI); pentaerythritol tetrakis(3-mercaptobutylate) represented by (VII); and 1,3,5-tris(3-mercaptobutyloxyethyl)-1,3,5-triazine-2,4,6(1H,3H,5H)-trione represented by (VIII).

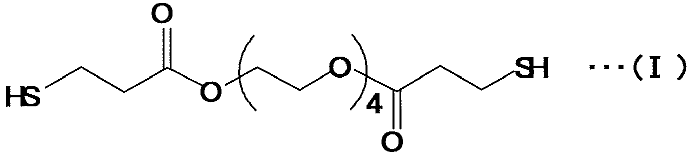

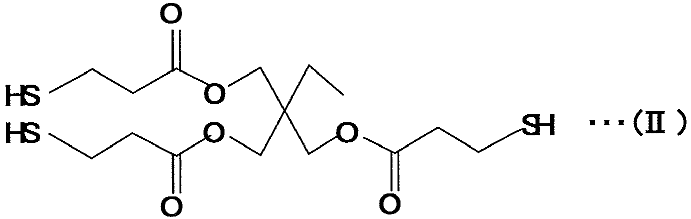

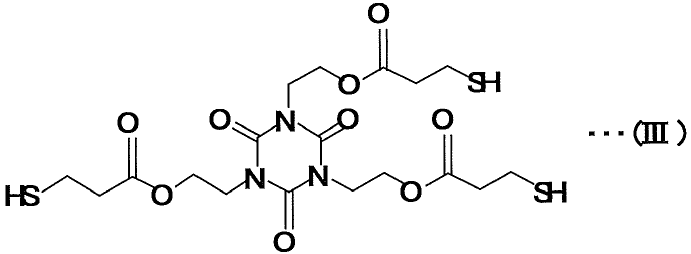

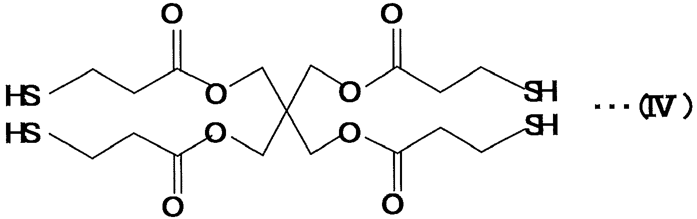

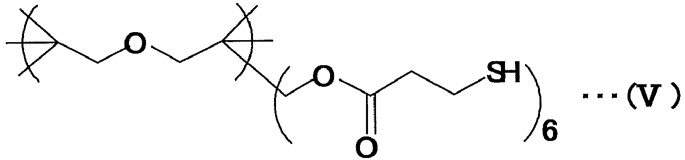

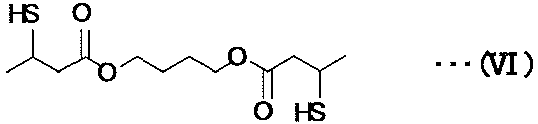

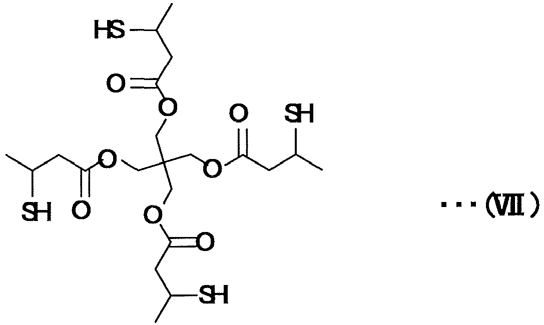

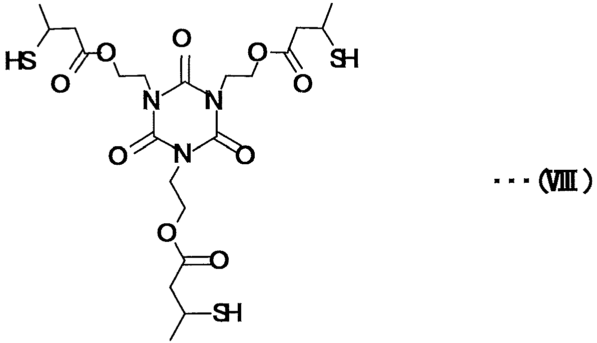

Each of these examples of the polythiol (C) has good compatibility with the urethane (meta-) acrylate oligomer (A) and (meta-) acryloyl morpholine monomer (B), and thereby forms a crosslinked polymer in a preferred manner with the (meta-) acrylate groups contained therein. Besides, each example of the polythiol (C) may be used alone or in combination with one or more other examples.

As described earlier, as long as thiol groups can be introduced into the composition in a certain amount based on the amount of (meta-) acrylate groups, each example of the polythiol (C) may be contained in an amount within a range of, without limitation, usually preferably 0.4-1.2 parts by mass, more preferably 0.5-1 parts by mass, per 100 parts by mass of the urethane (meta-) acrylate oligomer (A), while it may vary depending on the amount of the urethane (meta-) acrylate oligomer (A) and (meta-) acryloyl morpholine monomer (C) or the type of polythiol (C) used. If the polythiol (C) is contained in an amount within the above-identified range, the composition may exhibit good adhesion to adherends, including thermoplastic resins such as PET (particularly, untreated PET) or polyimide, as well as metal oxides such as IZO and metals such as gold.

### [Photopolymerization Initiator (D)]

The thiol-containing resin composition of the present invention further contains a photopolymerization initiator (D). Specific examples of the photopolymerization initiator (D) include: as intramolecular cleavage type, benzoin derivatives, benzyl ketals [e.g., IRGACURE 651 (trade name) manufactured by Ciba Specialty Chemicals Inc.], α-hydroxy acetophenones [e.g., DAROCUR 1173, IRGACURE 184, IRGACURE 127 (trade name) manufactured by Ciba Specialty Chemicals Inc.], α-amino acetophenones [e.g., IRGACURE 907, IRGACURE 369 (trade name) manufactured by Ciba Specialty Chemicals Inc.], a combination of α-amino acetophenones and thioxanthones (e.g., isopropylthioxanthone, diethylthioxanthone), acyl phosphine oxides [e.g., IRGACURE 819 (trade name) manufactured by Ciba Specialty Chemicals Inc.]; and as hydrogen abstraction type, a combination of benzophenones and amine, a combination of thioxanthone and amine. A combination of intramolecular cleavage type and hydrogen abstraction type is also possible. Among others, oligomerized α-hydroxy acetophenones and acrylated benzophenones are preferred. More specific examples include oligo[2-hydroxy-2-methyl-1-[4-(1-methylvinyl)phenyl]propanone] [e.g., ESACURE KIP150 (trade name) manufactured by Lamberti S.p.A], acrylated benzophenone [e.g., Ebecryl P136 (trade name) manufactured by Daicel-UCB Company, Ltd.], imide acrylate.

In addition to the above, the following may also be used as the photopolymerization initiator (D): 1-[4-(2-hydroxyethoxy)phenyl]-2-methyl-1-propane-1-one, 1-hydroxy-cyclohexyl-phenylketone [e.g., IRAGACURE184 (trade name) manufactured by Ciba Specialty Chemicals Inc.], a mixture of 1-hydroxy-cyclohexyl-phenyl-ketone and benzophenone, 2,2-dimethoxy-1,2-diphenylethane-1-one, 2,4,6-trimethylbenzoyl-phenylphosphine oxide, 2,4,6-trimethylbenzoyl-phenyl-phenyl-ethoxy-phosphine oxide, 2-benzyl-2-dimethylamino-1-(4-morpholinophenyl)butanone-1,2-hydroxy-2-methyl-1-phenyl-propane-1-one, 2-methyl-1-[(4-methylthio)phenyl]-2-morpholinopropane-1-one, benzoyl methyl ether, benzoyl ethyl ether, benzoyl butyl ether, benzoyl isopropyl ether, bis(2,4,6-trimethylbenzoyl)phenylphosphine oxide, 2-hydroxy-2-methyl-[4-(1-methylvinyl)phenyl]propanol oligomer, a mixture of 2-hydroxy-2-methyl-[4-(1-methylvinyl)phenyl]propanol oligomer and 2-hydroxy-2-methyl-1-phenyl-1-propanone, isopropylthioxanthone, methyl o-benzoylbenzoate, [4-(methylphenylthio)phenyl]phenylmethane, and so on.

The photopolymerization initiator (D) is contained in an amount within a range of preferably 0.01-10 parts by mass, more preferably 0.05-7 parts by mass, even more preferably 0.1-5 parts by mass, per 100 parts by mass of the total of the urethane (meta-) acrylate oligomer (A) and the (meta-) acryloyl morpholine monomer (B). If the photopolymerization initiator (D) is contained in an amount less than 0.01 parts by mass, the compound becomes less effective to initiate light curing of the adhesive resin composition; whereas above 10 parts by mass, the effect provided by the compound to initiate light curing becomes saturated, in which case, however, the raw material cost of the adhesive resin composition increases and any initiator residues may lead to discoloration, degradation.

### [Other Additives]

In addition to the above-described urethane (meta-) acrylate oligomer (A), (meta-) acryloyl morpholine monomer (B), polythiol (C) and photopolymerization initiator (D), the adhesive resin composition of the present invention may also contain other additives in an amount without departing from the object of the invention. For example, these additives include: (meta-) acrylic ester such as (meta-) acrylic acid methyl, (meta-) acrylic acid ethyl or (meta-) acrylic acid n-propyl; (meta-) acrylic acid aryl such as (meta-) acrylic acid benzyl; (meta-) acrylic acid alkoxy ester such as (meta-) acrylic acid 2-methoxyethyl or (meta-) acrylic acid 2-ethoxyethyl; (meta-) acrylic acid alkylene glycol such as (meta-) acrylic acid ethylene glycol or (meta-) acrylic acid polyethylene glycol; hydroxyl group-containing monomers such as (meta-) acrylic acid 2-hydroxyethyl or (meta-) acrylic acid 2-hydroxypropyl; carboxyl group-containing monomers such as (meta-) acrylic acid or (meta-) acrylic acid β-carboxyethyl; amino group-containing monomers such as (meta-) acrylic acid aminoethyl or (meta-) acrylic acid dimethylaminoethyl; amide-containing monomers such as (meta-) acrylic amide or N,N-dimethyl (meta-) acrylic amide; (meta-) acrylic-based monomers such as epoxy group-containing monomers of (meta-) acrylic acid glycidyl ether or the like, and (meta-) acrylic-based polymers obtained by polymerizing these monomers; inorganic matter such as calcium carbonate, aluminium hydroxide, silica, clay, talc or titanium oxide; inorganic hollow particles such as glass balloons, shirasu balloons or ceramic balloons; organic matter such as nylon beads, acrylic beads or silicon beads; fillers selected from the organic hollow particles including vinylidene chloride balloons, acrylic balloon, and so on; foaming agents; dyes; pigments; silane coupling agents; polymerization inhibitors; stabilizers.

Thus, if a (meta-) acrylic-based monomer or (meta-) acrylic-based polymer is contained as one of the other additives, the adhesive resin composition of the present invention contains (meta-) acrylate groups resulting from the other additive.

As mentioned above, the adhesive resin composition of the present invention has good adhesion to not only thermoplastic resins such as PET (particularly, untreated PET) or polyimide, but also to metal oxides such as IZO and metals such as gold. Thus, the adhesive resin composition of the present invention can be used for bonding of various adherends as described above in a preferred manner, and more specifically, it is very useful as an adhesive material for electronic members including anisotropic conductive film (ACF), anisotropic conductive paste (ACP), non-conductive film (NCF), non-conductive paste (NCP).

### EXAMPLE

While the present invention will be specifically described based on examples given below, the present invention is not intended to be limited to these examples.

### [Comparative Examples 1-36 and Examples 1-21]

Adhesive resin compositions are prepared with combinations of components as shown in Tables 1-3. Measurements are made to determine the bonding strength to each adherend (PET: "Lumirror T60" manufactured by Toray Industries, Inc., PI: "Kapton 200EN-508X100-K3CAA" manufactured by Toray Industries, Inc., IZO: "HP125CC-B200" manufactured by Teijin Limited, Au: gold evaporated film for FPC manufactured by Maruwa Corporation) using the method as described below. The results are shown in Tables 1-5.

### [Measurements of Bonding Strength to Each Adherend]

(1) Each adhesive resin composition is applied to a control substrate to a thickness of 50µm; (2) readily bondable PET (03LF8) is placed on the composition as a backer so that the composition is sandwiched between the substrate and PET; (3) readily bondable PET is irradiated with UV from above at an irradiation strength of 700 mW/cm² to fabricate a sample; and (4) each sample is then subjected to a peeling test in accordance with JISK6854-2. Example 4 is included by way of reference.

**[Table 1]**

| | | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 | Comp. Ex. 9 | Comp. Ex. 10 | Comp. Ex. 11 |
|---|---|---|---|---|---|---|---|---|---|---|---|---|
| urethane (meta-) acrylate oligomer (parts by mass) | UV6640B^{*2} | 60 | 60 | 60 | 60 | 60 | 60 | | | | | |
| | UV3310B^{*3} | | | | | | | 60 | 60 | 60 | 60 | 60 |
| monomer (parts by mass) | AMO^{*8} | 40 | 40 | 40 | 40 | 40 | 40 | 40 | 40 | 40 | 40 | 40 |
| | IAA^{*9} | | | | | | | | | | | |
| | NP-A^{*10} | | | | | | | | | | | |
| | PE-3A^{*11} | | | | | | | | | | | |
| | PE-4A^{*12} | | | | | | | | | | | |
| | DPE-6A^{*13} | | | | | | | | | | | |
| polythiol^{*1} (equivalents (parts by mass)) | TMMP^{*14} | | 0.2(8.2) | 0.3(12.3) | | | | | 0.2(8.2) | | | |
| | PEMP^{*15} | | | | 0.2(7.5) | | | | | 0.2(7.5) | | |
| | TEMPIC^{*16} | | | | | 0.2(16.8) | | | | | 0.2(10.8) | |
| | DPMP^{*17} | | | | | | 0.2(8.0) | | | | | 0.2(8.0) |
| photopolymerization initiator^{*18} (parts by mass) | | 1 | 1 | 1 | 1 | 1 | 1 | 1 | 1 | 1 | 1 | 1 |
| bonding evaluation (N/m) | PET | 7.6 | 12.5 | 20.0 | 10.0 | 10.0 | 11.0 | 5.0 | 6.0 | 3.0 | 8.0 | 7.0 |
| | PI | 16.3 | 17.0 | 491.0 | 13.5 | 13.0 | 10.0 | 4.5 | 6.5 | 5.0 | 10.0 | 10.0 |
| | IZO | 6.3 | 17.0 | 16.5 | 11.5 | 20.0 | 8.5 | 4.0 | 7.0 | 4.5 | 18.0 | 9.0 |
| | Au | 13.6 | 29.1 | 39.5 | 34.0 | 21.5 | 28.0 | 19.3 | 10.5 | 10.0 | 28.0 | 30.0 |

**[Table 2]**

| | | Comp. Ex. 12 | Comp. Ex. 13 | Comp. Ex. 14 | Comp. Ex. 15 | Comp. Ex. 16 | Comp. Ex. 17 | Comp. Ex. 18 | Comp. Ex. 19 | Comp. Ex. 20 | Comp. Ex. 21 | Comp. Ex. 22 | Comp. Ex. 23 | Comp. Ex. 24 |
|---|---|---|---|---|---|---|---|---|---|---|---|---|---|---|
| urethane (meta-) acrylate oligomer (parts by mass) | UV6640B^{*2} | 60 | 60 | 60 | 60 | 60 | 60 | 60 | | | | | | |
| | UV3310B^{*3} | | | | | | | | 60 | 60 | 60 | 60 | 60 | 60 |
| monomer (parts by mass) | AMO^{*8} | | | | | | | | | | | | | |
| | IAA^{*9} | 40 | | | | | | | | | | | | |
| | NP-A^{*10} | | 40 | | | | | | 40 | | | | | |
| | PE-3A^{*11} | | | 40 | 40 | | | | | 40 | | | | |
| | PE-4A^{*12} | | | | | 40 | 40 | | | | 40 | 40 | | |
| | DPE-6A^{*13} | | | | | | | 40 | | | | | 40 | 40 |
| polythiol^{*1} (equivalents (parts by mass)) | TMMP^{*14} | | | | | | | | | | | | | |
| | PEMP^{*15} | 0.5 (18.7) | 0.5 (24.5) | 0.5 (26.1) | 1 (52.1) | 0.5 (29.2) | 1 (58.5) | 0.5 (26.8) | 0.5 (18.7) | 0.5 (24.3) | 0.5 (26.1) | 1 (52.1) | 0.5 (26.8) | 1 (53.7) |
| | TEMPIC^{*16} | | | | | | | | | | | | | |
| | DPMP^{*17} | | | | | | | | | | | | | |
| photopolymerization initiator^{*18} (parts by mass) | | 1 | 1 | 1 | 1 | 1 | 1 | 1 | 1 | 1 | 1 | 1 | 1 | 1 |
| bonding evaluation (N/m) | PET | 23.0 | 8.0 | 7.0 | 7.0 | 7.0 | 5.5 | 0.0 | 6.5 | 6.0 | 1.0 | 10.5 | 9.0 | 9.0 |
| | PI | 65.0 | 19.0 | 10.0 | 26.5 | 8.0 | 21.5 | 5.0 | 10.0 | 7.0 | 2.0 | 17.5 | 8.0 | 24.5 |
| | IZO | 43.0 | 44.5 | 9.0 | 32.5 | 9.5 | 25.0 | 5.5 | 18.0 | 7.0 | 4.5 | 29.5 | 9.0 | 55.5 |
| | Au | 56.5 | 14.0 | 11.5 | 69.5 | 13.5 | 19.5 | 13.0 | 115.0 | 7.5 | 15.5 | 14.5 | 14.0 | 15.0 |

**[Table 3]**

| | | Ex. 1 | Ex. 2 | Ex. 3 | Ex. 4 * | Ex. 5 | Ex. 6 | Ex. 7 | Ex. 8 | Ex. 9 | Ex. 10 | Ex. 11 | Ex. 12 | Ex. 13 | Ex. 14 |
|---|---|---|---|---|---|---|---|---|---|---|---|---|---|---|---|
| urethane (meta-) acrylate oligomer (parts by mass) | UV6640B ^{*2} | 60 | 60 | 60 | 60 | 60 | 60 | 60 | 60 | 60 | | | | | |
| | UV3310B ^{*3} | | | | | | | | | | 60 | 60 | 60 | 60 | 60 |
| monomer (parts by mass) | AMO^{*8} | 40 | 40 | 40 | 40 | 40 | 40 | 40 | 40 | 40 | 40 | 40 | 40 | 40 | 40 |
| | IAA^{*9} | | | | | | | | | | | | | | |
| | NP-A^{*10} | | | | | | | | | | | | | | |
| | PE-3A^{*11} | | | | | | | | | | | | | | |
| | PE-4A^{*12} | | | | | | | | | | | | | | |
| | DPE-6A^{*13} | | | | | | | | | | | | | | |
| polythiol^{*1} (equivalents (parts by mass)) | TMMP^{*14} | 0.4 (16.3) | 0.5 (26.4) | 1 (40.5) | 1.5 (61.3) | | | | | | 0.5 (26.4) | 1 (46.8) | | | |
| | PEMP^{*15} | | | | | 0.5 (18.8) | 1 (37.5) | | | | | | 1 (37.5) | | |
| | TEMPIC^{*1 6} | | | | | | | 0.5 (26.9) | 1 (53.8) | | | | | 1 (53.8) | |
| | DPMP^{*17} | | | | | | | | | 0.5(20. 1) | | | | | 1 (40.1) |
| photopolymerization initiator^{*18} (parts by mass) | | 1 | 1 | 1 | 1 | 1 | 1 | 1 | 1 | 1 | 1 | 1 | 1 | 1 | 1 |
| bonding evaluation (N/m) | PET | 106.0 | 439.5 | 363.5 | 15.5 | 114.0 | 626.5 | 139.0 | 498.0 | 137.0 | 119.0 | 878.0 | 1237. 5 | 1013. 5 | 515.5 |
| | PI | 385.0 | 671.0 | 441.5 | 15.0 | 500.0 | 645.5 | 651.5 | 560.0 | 414.5 | 206.5 | 925.5 | 1335. 0 | 1228. 0 | 1046. 0 |
| | IZO | 103.0 | 269.0 | 340.0 | 16.0 | 118.0 | 204.0 | 282.0 | 115.0 | 359.0 | 128.0 | 456.0 | 482.0 | 483.5 | 612.0 |
| | Au | 624.0 | 260.0 | 382.0 | 20.5 | 219.0 | 156.5 | 776.5 | 525.5 | 719.5 | 132.0 | 719.0 | 1192. 5 | 1228. 0 | 1591. 5 |

**[Table 4]**

| | | Ex. 15 | Ex. 16 | Ex. 17 | Ex. 18 | Ex. 19 | Comp. Ex. 25 | Comp. Ex. 26 | Comp. Ex. 27 | Comp. Ex. 28 |
|---|---|---|---|---|---|---|---|---|---|---|
| urethane (meta-) acrylate oligomer (parts by mass) | UV6640B^{*2} | 80 | 70 | 50 | 40 | 30 | 70 | 50 | 40 | 30 |
| | UV3310B^{*3} | | | | | | | | | |
| | UV3200B*4 | | | | | | | | | |
| | UV3700B*5 | | | | | | | | | |
| | UV6300B*6 | | | | | | | | | |
| | UV7605B*7 | | | | | | | | | |
| monomer (parts by mass) | AMO^{*8} | 20 | 30 | 50 | 60 | 70 | 30 | 50 | 60 | 70 |
| | IAA^{*9} | | | | | | | | | |
| | NP-A^{*10} | | | | | | | | | |
| | PE-3A^{*11} | | | | | | | | | |
| | PE-4A^{*12} | | | | | | | | | |
| | DPE-6A^{*13} | | | | | | | | | |
| polythiol^{*1} (equivalents (parts by mass)) | TMMP^{*14} | | | | | | | | | |
| | PEMP^{*15} | 0.5(11.5) | 0.5(16.0) | 0.5(24.9) | 0.5(29.3) | 0.5(33.7) | | | | |
| | TEMPIC^{*16} | | | | | | | | | |
| | DPMP^{*17} | | | | | | | | | |
| photopolymerization initiator^{*18} (parts by mass) | | 1 | 1 | 1 | 1 | 1 | 1 | 1 | 1 | 1 |
| bonding evaluation (N/m) | PET | 34.0 | 102.0 | 935.0 | 474.0 | 279.0 | 2.0 | 2.0 | 2.0 | 3.0 |
| | PI | 126.0 | 324.0 | 494.0 | 1495.0 | 996.0 | 2.0 | 3.0 | 3.0 | 3.0 |
| | IZO | 101.0 | 123.0 | 141.0 | 107.0 | 170.0 | 2.0 | 2.0 | 2.0 | 3.0 |
| | Au | 383.0 | 602.0 | 447.0 | 718.0 | 266.0 | 3.0 | 6.0 | 5.0 | 37.0 |

**[Table 5]**

| | | Ex. 20 | Ex. 21 | Comp. Ex. 29 | Comp. Ex. 30 | Comp. Ex. 31 | Comp. Ex. 32 | Comp. Ex. 33 | Comp. Ex. 34 | Comp. Ex. 35 | Comp. Ex. 36 |
|---|---|---|---|---|---|---|---|---|---|---|---|
| urethane (meta-) acrylate oligomer (parts by mass) | UV6640B^{*2} | | | | | | | | | | |
| | UV3310B^{*3} | | | | | | | | | | |
| | UV3200B*4 | 60 | | 60 | | | | | | | |
| | UV3700B*5 | | 60 | | 60 | | | | | | |
| | UV6300B*6 | | | | | | 60 | 60 | | | |
| | UV7605B*7 | | | | | | | | 60 | 60 | 60 |
| monomer (parts by mass) | AMO^{*8} | 40 | 40 | 40 | 40 | 40 | 40 | 40 | 40 | 40 | 40 |
| | IAA^{*9} | | | | | | | | | | |
| | NP-A^{*10} | | | | | | | | | | |
| | PE-3A^{*11} | | | | | | | | | | |
| | PE-4A^{*12} | | | | | | | | | | |
| | DPE-6A^{*13} | | | | | | | | | | |
| polythiol^{*1} (equivalents (parts by mass)) | TMMP^{*14} | | | | | | | | | | |
| | PEMP^{*15} | 1.0(36.0) | 1.0(35.0) | | | | 0.5(29.5) | 1.0(59.0) | | 0.5(23.9) | 1.0(47.8) |
| | TEMPIC^{*16} | | | | | | | | | | |
| | DPMP^{*17} | | | | | | | | | | |
| photopolymerization initiator^{*18} (parts by mass) | | 1 | 1 | 1 | 1 | 1 | 1 | 1 | 1 | 1 | 1 |
| bonding evaluation (N/m) | PET | 108.0 | 1700.0 | 5.0 | 455.0 | 3.0 | 2.0 | 2.0 | 2.0 | 2.0 | 2.0 |
| | PI | 223.0 | 1232.0 | 9.0 | 578.0 | 2.0 | 3.0 | 3.0 | 2.0 | 2.0 | 2.0 |
| | IZO | 171.0 | 823.0 | 3.0 | 25.0 | 2.0 | 2.0 | 3.0 | 1.0 | 2.0 | 3.0 |
| | Au | 209.0 | 1546.0 | 11.0 | 111.0 | 2.0 | 4.0 | 5.0 | 2.0 | 3.0 | 11.0 |

| | | | | | | | | | | | |
|---|---|---|---|---|---|---|---|---|---|---|---|
| *1: The number of equivalents of thiol groups to that of (meta-) acrylate groups contained in oligomers and monomers, content shown in parentheses (parts by mass) *2: "UV6640B" (trade name) manufactured by The Nippon Synthetic Chemical Industry Co., Ltd., polyether-based urethane acrylate oligomer, weight average molecular weight (Mw) = 5,000 *3: "UV3310B" (trade name) manufactured by The Nippon Synthetic Chemical Industry Co., Ltd., polycarbonate-based urethane acrylate oligomer, weight average molecular weight (Mw) = 5,000 *4: "UV3200B" (trade name) manufactured by The Nippon Synthetic Chemical Industry Co., Ltd., polyester-based urethane acrylate oligomer, weight average molecular weight (Mw) = 10,000 *5: "UV3700B" (trade name) manufactured by The Nippon Synthetic Chemical Industry Co., Ltd., polyether-based urethane acrylate oligomer, weight average molecular weight (Mw) = 38,000 *6: "UV6300B" (trade name) manufactured by The Nippon Synthetic Chemical Industry Co., Ltd., urethane acrylate oligomer-containing composition, weight average molecular weight (Mw) = 1,800 *7: "UV7605B" (trade name) manufactured by The Nippon Synthetic Chemical Industry Co., Ltd., urethane acrylate oligomer-containing composition, weight average molecular weight (Mw) = 3,900 *8: "AMO" (trade name) manufactured by Shin Nakamura Chemical Co., Ltd., acryloyl morpholine *9: "IAA" (trade name) manufactured by Kyoeisha Chemical Co., Ltd., isoamyl acrylate *10: "NP-A" (trade name) manufactured by Kyoeisha Chemical Co., Ltd., neo-pentyl glycol diacrylate *11: "PE-3A" (trade name) manufactured by Kyoeisha Chemical Co., Ltd., trimethylol propane triacrylate *12: "PE-4A" (trade name) manufactured by Kyoeisha Chemical Co., Ltd., pentaerythritol tetra acrylate *13: "DPE-6A" (trade name) manufactured by Kyoeisha Chemical Co., Ltd., dipentaerythritol hexaacrylate *14: trimethylol propane tris(3-mercaptopropionate) *15: pentaerythritol tetrakis(3-mercaptopropionate), *16: tris[(3-mercaptopropionyloxy)-ethyl]isocyanurate, *17: content per 100 parts by mass of the total of dipentaerythritol hexakis(3-mercaptopropionate), urethane (meta-) acrylate oligomer and monomer *18: "IRGACURE 184D" (trade name) manufactured by Ciba Specialty Chemicals Inc., 1-hydroxy-cyclohexyl-phenylketone | | | | | | | | | | | |

It can be seen from the results shown in Tables 1-3 that Examples 2 and 10, for example, each of which contains 0.5 equivalents of polythiol (C), offer extremely good adhesion to all types of adherends as compared with Comparative Examples 1 and 7, each of which involves a combination of a urethane (meta-) acrylate oligomer (A) with a (meta-) acryloyl morpholine monomer (B). It will also be appreciated that Examples 1-14 have the same or a more significant effect than Comparative Examples 12-18 and 19-24, each of which contains a (meta-) acrylic monomer other than the (meta-) acryloyl morpholine monomer (B). Further, it will be understood that Examples 1-14 achieve the same or better results than Comparative Examples 2-6 and 8-11, each of which contains less than 0.4 equivalents of thiol groups to the (meta-) acrylate groups. It is also apparent that Examples 1-3 and 5-14, each of which contains thiol groups in an amount of not more than 1.0 equivalent to the (meta-) acrylate groups, have more significant effects than Example 4, which contains thiol groups in an amount of more than 1.0 equivalent to the (meta-) acrylate groups.

In addition, it can be seen from the results shown in Tables 4-5 that Examples 15-19, each of which contains a (meta-) acryloyl morpholine monomer (B) in an amount of 20 parts by mass or more per 100 parts by mass of the total of the urethane (meta-) acrylate oligomer (A) and the (meta-) acryloyl morpholine monomer (B), achieve extremely beneficial effects as compared with Comparative Examples 25-28, none of which contains polythiol (C). Among these, Examples 16-19 contain a (meta-) acryloyl morpholine monomer (B) in an amount of 30-70 parts by mass and thus exhibit balanced, good adhesion to various adherends. Further, Examples 1-21, each of which contains a urethane (meta-) acrylate oligomer (A) having a weight average molecular weight (Mw) of 5,000-40,000, exhibit good adhesion in combination with good compatibility with each component as compared with Comparative Examples 31-36, each of which has a weight average molecular weight (Mw) of less than 5,000.

## Claims

1. A thiol group-containing adhesive resin composition comprising: (A) a urethane (meta-) acrylate oligomer having a weight average molecular weight (measured by GPC and calculated by polystyrene conversion) (Mw) of 5,000-40,000; (B) a (meta-) acryloyl morpholine monomer; (C) a polythiol; and (D) a photopolymerization initiator,
wherein the polythiol (C) has thiol groups in an amount of 0.4-1.2 equivalents per 1 equivalent of the total (meta-) acrylate groups contained in the thiol group-containing adhesive resin composition.

2. The thiol group-containing adhesive resin composition according to claim 1, wherein the polythiol (C) has thiol groups in an amount of 1.0 equivalent or less per 1 equivalent of the total (meta-) acrylate groups contained in the urethane (meta-) acrylate oligomer (A) and in the (meta-) acryloyl morpholine monomer (B).

3. The thiol group-containing adhesive resin composition according to claim 1 or 2, wherein the (meta-) acryloyl morpholine monomer (B) is contained in an amount of 20 parts by mass or more per 100 parts by mass of the total of the urethane (meta-) acrylate oligomer (A) and the (meta-) acryloyl morpholine monomer (B).

4. The thiol group-containing adhesive resin composition according to claim 1 or 2, wherein the (meta-) acryloyl morpholine monomer (B) is contained in an amount of 30-70 parts by mass per 100 parts by mass of the total of the urethane (meta-) acrylate oligomer (A) and the (meta-) acryloyl morpholine monomer (B).

5. The thiol group-containing adhesive resin composition according to any of claims 1-4, wherein the polythiol (C) is a polythiol derived from mercaptocarboxylic acid.

6. The thiol group-containing adhesive resin composition according to any of claims 1-4, wherein the polythiol (C) is tetraethylene glycol bis(3-mercaptopropionate) represented by the following chemical formula (I); trimethylol propane tris(3-mercaptopropionate) represented by (II); tris[(3-mercaptopropionyloxy)-ethyl]isocyanurate represented by (III); pentaerythritol tetrakis(3-mercaptopropionate) represented by (IV); dipentaerythritol hexakis(3-mercaptopropionate) represented by (V); 1,4-bis(3-mercaptobutyryloxy)butane represented by (VI); pentaerythritol tetrakis(3-mercaptobutylate) represented by (VII); or 1,3,5-tris(3-mercaptobutyloxyethyl)-1,3,5-triazine-2,4,6(1H,3H,5H)-trione represented by (VIII).

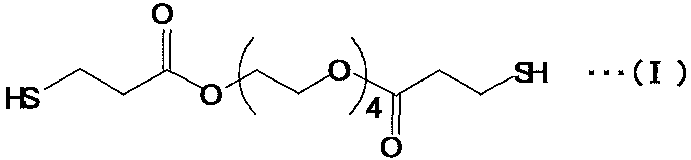

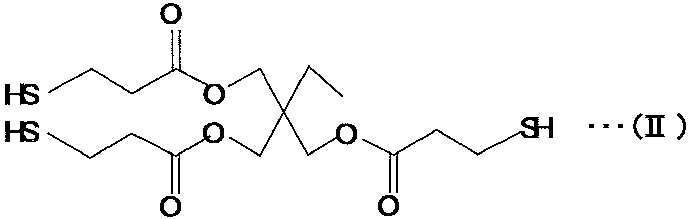

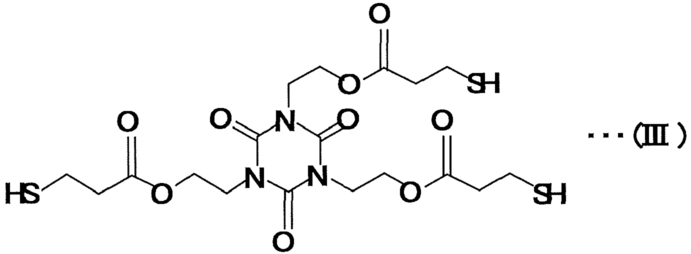

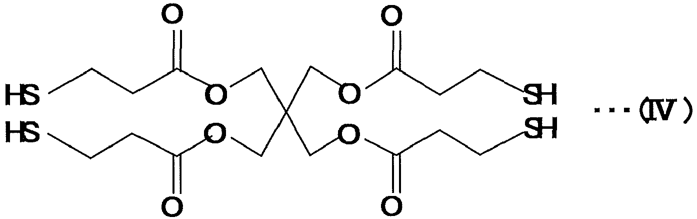

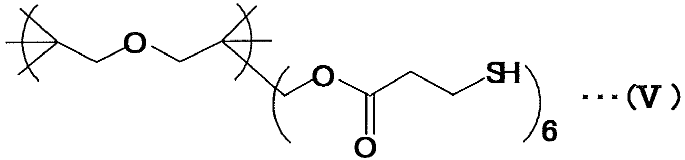

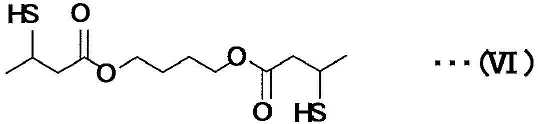

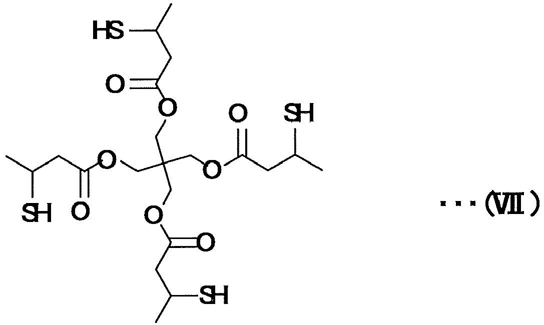

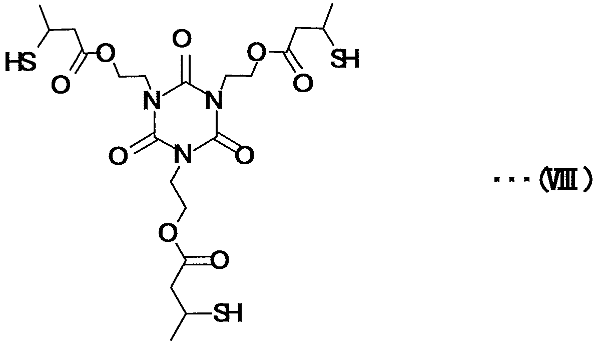

## Patentansprüche

1. Thiolgruppen enthaltende Klebharz-Zusammensetzung, umfassend: (A) ein Urethan(meta)acrylat-Oligomer mit einer massegemittelten relativen Molekülmasse (Mw) (gemessen mit Hilfe der GPC und berechnet anhand von Polystyrol-Umwandlung) von 5.000 bis 40.000; (B) ein (Meta)acryloylmorpholin-Monomer; (C) ein Polythiol; und (D) einen Photopolymerisationsinitiator,
wobei das Polythiol (C) Thiol-Gruppen in einer Menge von 0,4 bis 1,2 Äquivalenten pro 1 Äquivalent der gesamten (Meta)acrylat-Gruppen aufweist, die in der Thiol-Gruppen enthaltenden Klebharz-Zusammensetzung enthalten sind.

2. Thiolgruppen enthaltende Klebharz-Zusammensetzung nach Anspruch 1, wobei das Polythiol (C) Thiol-Gruppen in einer Menge von 1,0 Äquivalenten oder weniger pro 1 Äquivalent der gesamten (Meta)acrylat-Gruppen aufweist, die in dem Urethan(meta)acrylat-Oligomer (A) und in dem (Meta)acryloylmorpholin-Monomer (B) enthalten sind.

3. Thiolgruppen enthaltende Klebharz-Zusammensetzung nach Anspruch 1 oder 2, wobei das (Meta)acryloylmorpholin-Monomer (B) in einer Menge von 20 Gewichtsteilen oder mehr pro 100 Gewichtsteile der Gesamtheit des Urethan(meta)acrylat-Oligomers (A) und des (Meta)acryloylmorpholin-Monomers (B) enthalten ist.

4. Thiolgruppen enthaltende Klebharz-Zusammensetzung nach Anspruch 1 oder 2, wobei das (Meta)acryloylmorpholin-Monomer (B) in einer Menge von 30 bis 70 Gewichtsteilen pro 100 Gewichtsteile der Gesamtheit des Urethan(meta)acrylat-Oligomers (A) und des (Meta)acryloylmorpholin-Monomers (B) enthalten ist.

5. Thiolgruppen enthaltende Klebharz-Zusammensetzung nach einem der Ansprüche 1 bis 4, wobei das Polythiol (C) ein von Mercaptocarbonsäure abgeleitetes Polythiol ist.

6. Thiolgruppen enthaltende Klebharz-Zusammensetzung nach einem der Ansprüche 1 bis 4, wobei das Polythiol (C) Tetraethylenglycol bis(3-mercaptopropionat), dargestellt duch die folgende chemische Formel (I); Trimethylolpropan tris(3-mercaptopropionat), dargestellt durch (II), Tris[(3-mercaptopropionyloxy)-ethyl]isocyanurat, dargestellt durch (III); Pentaerythritol tetrakis(3-mercaptopropionat), dargestellt durch (IV); Dipentaerythritol hexakis(3-mercaptopropionat), dargestellt durch (V); 1,4-bis(3-Mercaptobutyryloxy)butan, dargestellt durch (VI); Pentaerythritol tetrakis(3-mercaptobutylat), dargestellt durch (VII) oder 1,3,5-tris(3-mercaptobutyloxyethyl)-1,3,5-triazin-2,4,6(1H,3H,5H)-trion, dargestellt durch (VIII), ist.

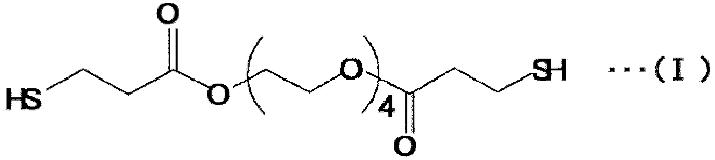

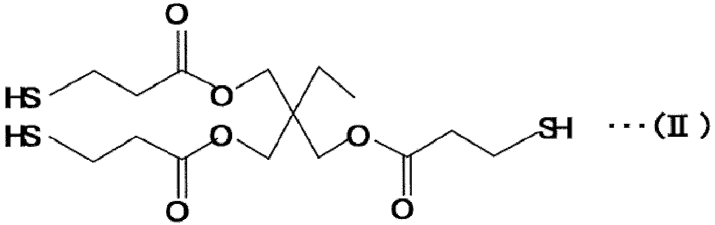

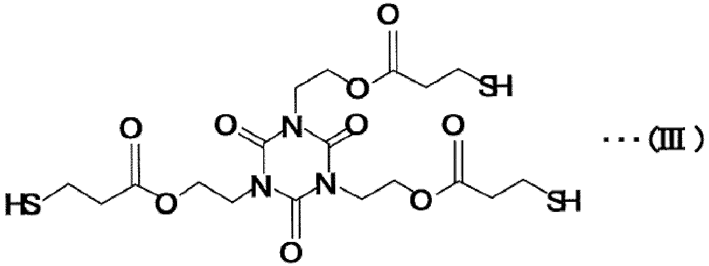

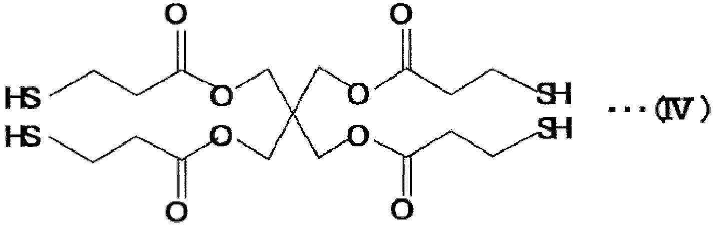

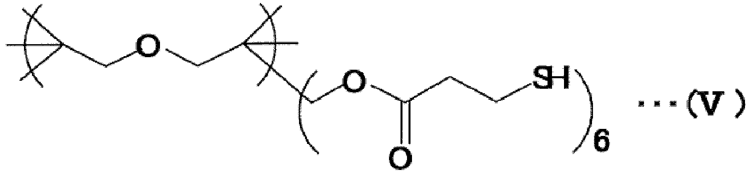

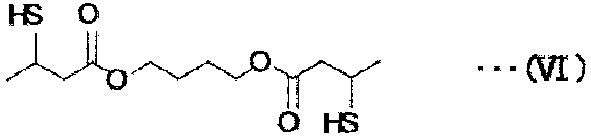

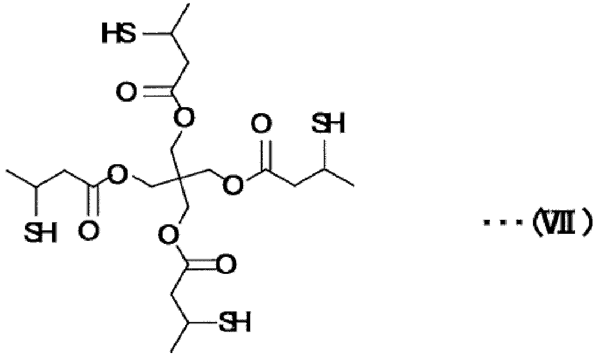

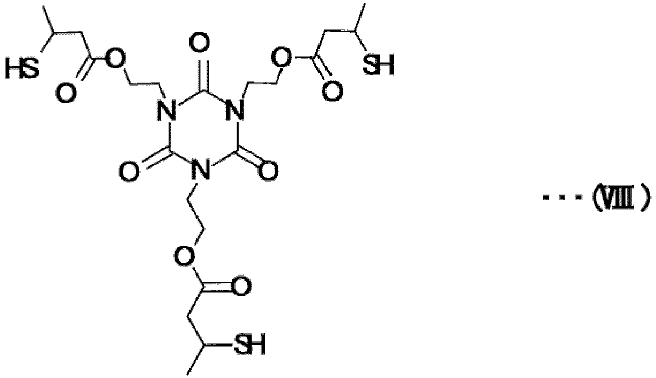

## Revendications

1. Composition de résine adhésive contenant un groupe thiol comprenant: (A) un oligomère d'uréthane (méta-) acrylate possédant un poids moléculaire moyen en poids (mesuré par GPC et calculé par la conversion de polystyrène) (Mw) de 5.000-40.000; (B) un monomère de (méta-) acryloylmorpholine; (C) un polythiol; et (D) un initiateur de photopolymérisation,
dans laquelle le polythiol (C) a des groupes thiols dans une quantité de 0,4-1,2 équivalents pour 1 équivalent du total des groupes (méta-) acrylates contenus dans la composition de résine adhésive contenant un groupe thiol.

2. Composition de résine adhésive contenant un groupe thiol selon la revendication 1, dans laquelle le polythiol (C) a des groupes thiols dans une quantité de 1,0 équivalent ou moins pour 1 équivalent du total des groupes (méta-) acrylates contenus dans l'oligomère d'uréthane (méta-) acrylate (A) et dans le monomère de (méta-) acryloylmorpholine (B).

3. Composition de résine adhésive contenant un groupe thiol selon la revendication 1 ou 2, dans laquelle le monomère de (méta-) acryloylmorpholine (B) est contenu dans une quantité de 20 parties en masse ou plus pour 100 parties en masse du total de l'oligomère d'uréthane (méta-) acrylate (A) et du monomère de (méta-) acryloylmorpholine (B).

4. Composition de résine adhésive contenant un groupe thiol selon la revendication 1 ou 2, dans laquelle le monomère de (méta-) acryloylmorpholine (B) est contenu dans une quantité de 30-70 parties en masse pour 100 parties en masse du total de l'oligomère d'uréthane (méta-) acrylate (A) et du monomère de (méta-) acryloylmorpholine (B).

5. Composition de résine adhésive contenant un groupe thiol selon l'une quelconque des revendications 1-4, dans laquelle le polythiol (C) est un polythiol dérivé d'acide mercaptocarboxylique.

6. Composition de résine adhésive contenant un groupe thiol selon l'une quelconque des revendications 1-4, dans laquelle le polythiol (C) est le bis(3-mercaptopropionate) de tétraéthylène glycol représenté par la formule chimique (I) suivante; le tris(3-mercaptopropionate) de triméthylol propane représenté par (II); le tris[(3-mercaptopropionyloxy)-éthyl]isocyanurate représenté par (III); le tétrakis(3-mercaptopropionate) de pentaérythritol représenté par (IV); l'hexakis(3-mercaptopropionate) de dipentaérythritol représenté par (V); le 1,4-bis(3-mercaptobutyryloxy)butane représenté par (VI); le tétrakis(3-mercaptobutylate) de pentaérythritol représenté par (VII); ou la 1,3,5-tris(3-mercaptobutyloxyéthyl)-1,3,5-triazine-2,4,6(1H-3H-5H)-trione représentée par (VIII).
